(19)

Europäisches
Patentamt
European
Patent Office
Office européen
des brevets

(11) **EP 4 478 144 A1**

(12) **EUROPEAN PATENT APPLICATION**

(43) Date of publication:
**18.12.2024 Bulletin 2024/51**

(21) Application number: **24155942.6**

(22) Date of filing: **06.02.2024**

(51) International Patent Classification (IPC):
**G05B 23/02** $^{(2006.01)}$

(52) Cooperative Patent Classification (CPC):
**G05B 23/0256; G05B 23/0254**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 US 202318336491**

(71) Applicant: **GE Infrastructure Technology LLC
Greenville, SC 29615 (US)**

(72) Inventors:
• **ABBASZADEH, Masoud
Niskayuna, 12309-1027 (US)**
• **REIMANN, Johan Michael
Niskayuna, 12309-1027 (US)**
• **ACHANTA, Hema K
Niskayuna, 12309-1027 (US)**

(74) Representative: **Dennemeyer & Associates S.A.
Postfach 70 04 25
81304 München (DE)**

(54) **ARTIFICIAL INTELLIGENCE BASED DATA-DRIVEN INTERCONNECTED DIGITAL TWINS**

(57) In some embodiments, a system node data store 120 may contain historical system node data associated with normal operation of an industrial asset, and a plurality of artificial intelligence model construction platforms 155 may receive historical system node data. Each platform 155 may then automatically construct a data-driven, dynamic artificial intelligence model 157 associated with the industrial asset based on received system node data. The plurality of artificial intelligence models 157 are interconnected and simultaneously trained to create a digital twin of the industrial asset. A synthetic disturbance platform 160 may inject at least one synthetic disturbance into the plurality of artificial intelligence models 157 to create, for each of a plurality of monitoring nodes 110, a series of synthetic disturbance monitoring node values over time that represent simulated abnormal operation of the industrial asset.

FIG. 1

EP 4 478 144 A1

**Description**

BACKGROUND

In some cases, a digital twin approach may use physics-based modeling and machine learning techniques to create operational twins that could be used, for example, for failure prediction. Some digital twins go beyond a singular model to focus on using artificial intelligence to simultaneously train multiple digital twin models which can encompass a multiplicity of aspects of the asset, including structural models, physical process models, software process models, as well as modeling other entities in the environment such as people, organizations, facilities, *etc.* When the models are semantic in nature, they may encompass hierarchies of assets and rich relationship modeling between the assets as well as between assets and other entities. The digital twin may provide a continual aggregation of knowledge with respect to industrial assets and their environment throughout their lifecycle. In this way, the digital twin can provide a living model that drives business outcomes.

A digital twin may include a virtual representation of an asset which may include a virtual replication of hardware, software, processes, and the like. As an example, an asset may include a physical asset such as a turbine, jet engine, windmill, oil rig, healthcare machine, or the like. As additional examples, an asset may include a software asset (*e.g.*, an application, an analytic, a service, *etc.*), a system of hardware and/or software (also referred to as a system of things), a physical process, an actor such as a human operator, weather, and the like.

A digital twin may be determined based on knowledge that is acquired from the asset (or the digital twin of the asset) and that is accumulated over time. For example, a digital twin may generate an alert or other warning based on a change in operating characteristics of the asset. The alert may be due to an issue with a component of the asset. In addition to the alert, the digital twin may determine similar issues that have previously occurred with the asset, provide a description of what caused those similar issues, what was done to address the issues, differences between the current issue and the previous issues, and the like.

Assets may be outfitted with one or more sensors (*e.g.*, physical sensors, virtual sensors, *etc.*) configured to monitor respective operations or conditions of the asset and the environment in which the asset operates. Data from the sensors can be recorded or transmitted to a cloud-based or other remote computing environment. By bringing such data into a cloud-based computing environment, new software applications informed by industrial process, tools and know-how can be constructed, and new analytics specific to an industrial environment can be created. Insights gained through analysis of such data can lead to enhanced asset designs, enhanced software algorithms for operating the same or similar assets, better operating efficiency, and the like.

A digital twin may be used in conjunction with applications and systems for managing machine and equipment assets and can be hosted within an Industrial Internet of Things ("IIoT"). For example, an IIoT may connect physical assets, such as turbines, jet engines, locomotives, healthcare devices, and the like, software assets, processes, actors, and the like, to the Internet or cloud, or to each other in some meaningful way such as through one or more networks. The systems described herein can be implemented within a "cloud" or remote or distributed computing resource. The cloud can be used to receive, relay, transmit, store, analyze, or otherwise process information for or about assets. In an example, a cloud computing system includes at least one processor circuit, at least one database, and a plurality of users and assets that are in data communication with the cloud computing system. The cloud computing system can further include or can be coupled with one or more other processor circuits or modules configured to perform a specific task, such as to perform tasks related to asset maintenance, analytics, data storage, security, or some other function.

When multiple models are associated with a digital twin, high-fidelity physics models (*e.g.,* which could help create the digital twin) might not be available for older industrial assets and/or assets produced by a wide variety of manufacturers. Moreover, creating such physics-based models can be a time-consuming and error prone process. Further, it may be important that the digital twin exhibit certain characteristics, such as subsystem dynamic stability, internal stability of a control loop, robustness, *etc.* It would therefore be desirable to automatically create a digital twin in an automatic, accurate, and stable manner even when high fidelity, physics-based models of an asset are not available.

SUMMARY

According to some embodiments, a system node data store may contain historical system node data associated with normal operation of an industrial asset, and a plurality of artificial intelligence model construction platforms may receive historical system node data. Each platform may then automatically construct a data-driven, dynamic artificial intelligence model associated with the industrial asset based on received system node data. The plurality of artificial intelligence models are interconnected and simultaneously trained to create a digital twin of the industrial asset. A synthetic disturbance platform may inject at least one synthetic disturbance into the plurality of artificial intelligence models to create, for each of a plurality of monitoring nodes, a series of synthetic disturbance monitoring node values over time that represent simulated abnormal operation of the industrial asset.

Some embodiments comprise: means for receiving, by a plurality of artificial intelligence model construction platforms from a system node data store, historical system node data associated with normal operation of the industrial asset; means for automatically constructing, by each artificial intelligence model construction platform, a data-driven, dynamic artificial intelligence model associated with the industrial asset based on received system node data, wherein the plurality of artificial intelligence models are interconnected; means for simultaneously training the plurality of data-driven, dynamic artificial intelligence models to create a digital twin of the industrial asset; and means for injecting, by a synthetic disturbance platform, at least one synthetic disturbance into the plurality of artificial intelligence models to create, for each of a plurality of monitoring nodes, a series of synthetic disturbance monitoring node values over time that represent simulated abnormal operation of the industrial asset.

Some technical advantages of some embodiments disclosed herein are improved systems and methods to generate a digital twin for an industrial asset in an automatic, accurate, and stable manner.

BRIEF DESCRIPTION OF THE DRAWINGS

FIG. 1 is a high-level block diagram of a system associated with a digital twin according to some embodiments.

FIG. 2 is a digital twin method in accordance with some embodiments.

FIG. 3 illustrates a feedback loop configuration and external perturbations.

FIG. 4 is an implementation in accordance with some embodiments.

FIG. 5 is open loop system training.

FIG. 6 is closed loop system training in accordance with some embodiments.

FIG. 7 illustrates attacks injected into controller states.

FIG. 8 illustrates a fully interconnected simulation configuration.

FIG. 9 illustrates a fully independent simulation configuration.

FIG. 10 illustrates sensor, actuator, and controller nodes.

FIG. 11 illustrates a classification decision boundary using a two-class or multi-class support vector machine with a radial basis function kernel according to some embodiments.

FIG. 12 illustrates results according to some embodiments.

FIG. 13 is a high-level block diagram of a system to protect an industrial asset.

FIG. 14 is an industrial asset protection method.

FIGS. 15 and 16 illustrate features, feature vectors, and decision boundaries in accordance with some embodiments.

FIG. 17 is a threat detection model creation method.

FIG. 18 is a high-level block diagram of a system in accordance with some embodiments.

FIG. 19 is a data-driven model creation method according to some embodiments.

FIG. 20 is a synthetic attack injection method in accordance with some embodiments.

FIG. 21 is a high-level block diagram of a system to protect an industrial asset according to some embodiments.

FIG. 22 illustrates an off-line training process in accordance with some embodiments.

FIG. 23 illustrates global features according to some embodiments.

FIG. 24 is a block diagram of an industrial asset protection platform according to some embodiments of the present invention.

FIG. 25 is a tabular portion of a data-driven model database in accordance with some embodiments.

FIG. 26 is a digital twin display in accordance with some embodiments.

DETAILED DESCRIPTION

In the following description, specific details are set forth in order to provide a thorough understanding of the various example embodiments. It should be appreciated that various modifications to the embodiments will be readily apparent to those skilled in the art, and the generic principles defined herein may be applied to other embodiments and applications without departing from the spirit and scope of the disclosure. Moreover, in the following description, numerous details are set forth for the purpose of explanation. However, one of ordinary skill in the art should understand that embodiments may be practiced without the use of these specific details. In other instances, well-known structures and processes are not shown or described in order not to obscure the description with unnecessary detail. Thus, the present disclosure is not intended to be limited to the embodiments shown but is to be accorded the widest scope consistent with the principles and features disclosed herein.

According to some embodiments, a system for construction of partitioned and interconnected data-driven digital twins is provided with provable theoretical guarantees (such as subsystem dynamic stability, internal stability of the control loop, controllability, observability, *etc.*). Such digital twins may be used for control-oriented modeling, control design, state estimation or dynamic system simulations as well as fault/anomaly simulations. Embodiments may also provide tools and techniques for robustness analysis, uncertainty quantification and robust design of dynamic models against model uncertainties and Input Output ("IO") perturbations.

Some embodiments assume that historical data from an asset is available for a given set of monitoring nodes (*e.g.,* sensors, actuators, or controller nodes). Any combination of these monitoring nodes might be utilized when developing a digital twin model. Embodiments may provide a method to build a classification decision boundary for a digital twin without using any previously available model. Such digital twins may be used for control-oriented modeling, control design, state estimation, dynamic system simulations, fault/anomaly simulations, *etc.* For example, such a system might be used to build decision boundaries for anomaly/cyber-attack detection in industrial control systems using historical data collected from the asset. Embodiments do not rely on availability of any model of the asset and thus it is applicable to any new asset from any Original Equipment Manufacturer ("OEM") so long as time series data is available. Embodiments may use collected field data for normal operation to reconstruct synthetic data points in the abnormal operating space using feature engineering. Having abnormal operating space provides robust decision boundary which is difficult to obtain when high fidelity models are not available. The attacks may be synthesized and injected into sensor, actuator or controller monitoring nodes of the data-driven identified plant and controller models. If additional normal data points are needed during boundary computation, embodiments may synthesize them using the identified models. The classification decision boundary can be created using the synthetic data in feature space. The system may be fully reconfigurable and can be applied to fully or partially available data collected from any number of sensor/actuator/controller monitoring nodes. Such an approach may improve detection accuracy (*i.e.,* reduce false positive and false negative rates) by enabling supervised classification which outperforms semi-supervised classification when only normal data is used.

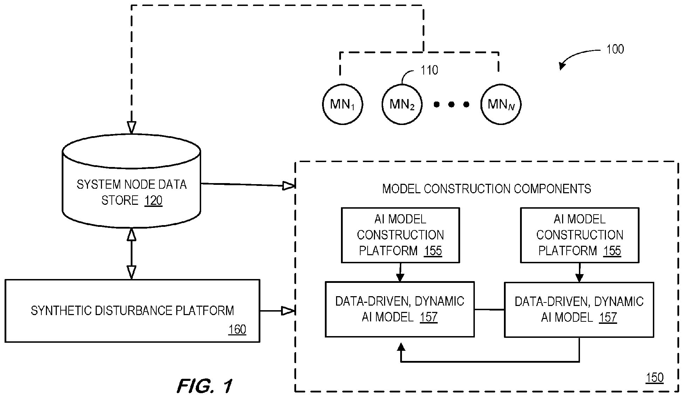

FIG. 1 is a high-level block diagram of a system 100 associated with a digital twin according to some embodiments. The system 100 may include a system node data store 120 storing, for each of a plurality of monitoring nodes 110, a series of normal values over time that represent normal operation of an industrial asset (*e.g.,* collected from actual monitoring node 110 data as illustrated by the dashed line in FIG. 1).

Information from the system node data store 120 may be provided to model construction components 150. The model construction components 150 include a plurality of artificial intelligence model construction platforms 155. Each model construction platform 155 may use information from the system node data store 120 to automatically create and train a data-driven, dynamic artificial intelligence model 157. The models 157 may be interconnected to create a digital twin of the industrial asset. Information from the system node data store 120 may also be provided to a synthetic disturbance platform 160 that automatically injects at least one synthetic disturbance into the artificial intelligence model. As used herein, the term "automatically" may refer to, for example, actions that can be performed with little or no human intervention.

As used herein, devices, including those associated with the system 100 and any other device described herein, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The system 100 may store information into and/or retrieve information from various data stores, such as the system node data store 120. The various data stores may be locally stored or reside remote from other components. Although a single synthetic disturbance platform 160 is shown in FIG. 1, any number of such devices may be included. Moreover, various devices described herein might be combined according to embodiments of the present invention. For example, in some embodiments, the synthetic disturbance platform 160 and system node data store 120 might comprise a single apparatus. The functions of the system 100 may be performed by a constellation of networked apparatuses, in a distributed processing or cloud-based architecture.

A user may access the system 100 via one of the monitoring devices (*e.g.,* a Personal Computer ("PC"), tablet, or smartphone) to view information about and/or manage digital twin and system information in accordance with any of the embodiments described herein. In some cases, an interactive graphical display interface may let a user define and/or adjust certain parameters (*e.g.,* information mappings, attack detection trigger levels, model configurations, *etc.*) and/or provide or receive automatically generated recommendations or results from the system 100.

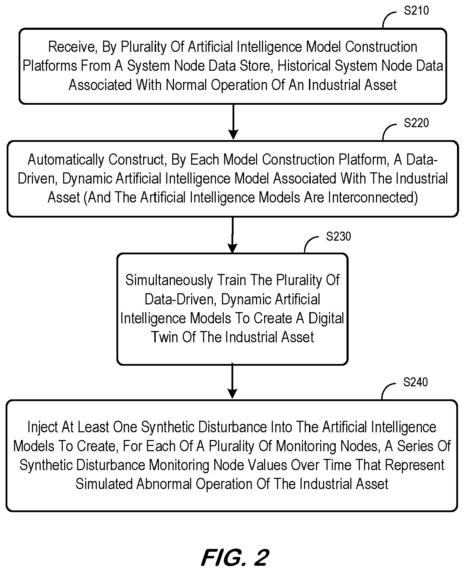

FIG. 2 is a digital twin method that might be associated with the system 100 of FIG. 1 in accordance with some embodiments. The flow charts described herein do not imply a fixed order to the steps, and embodiments of the present invention may be practiced in any order that is practicable. Note that any of the methods described herein may be performed by hardware, software, or any combination of these approaches. For example, a computer-readable storage medium may store thereon instructions that when executed by a machine result in performance according to any of the embodiments described herein.

At S210, a plurality of artificial intelligence model construction platforms may receive, from a system node data store, historical system node data associated with normal operation of an industrial asset. The historical system node data store might contain, for example, information associated with sensor nodes, critical sensor nodes, actuator nodes, controller nodes, key software nodes, *etc.* Moreover, the industrial asset may be associated with a turbine (*e.g.,* a gas turbine), a wind turbine, an engine (*e.g.,* a jet or locomotive engine), a refinery, a power grid, an autonomous vehicle, *etc.* At least one data-driven, dynamic artificial intelligence model may be built in state-space and use one of black-box and grey-box system identification techniques. Note that at least one of the data-driven, dynamic artificial intelligence models might be associated with a plant model of the industrial asset, a controller model of the industrial asset, a sub-controller model of the industrial asset, *etc.*

At S220, the system may automatically construct, by each artificial intelligence model construction platform, a data-driven, dynamic artificial intelligence model associated with the industrial asset based on received system node data. Moreover, the plurality of artificial intelligence models may be interconnected. At S230, the system may simultaneously train the plurality of data-driven, dynamic artificial intelligence models to create a digital twin of the industrial asset. The digital twin may be, for example associated with control-oriented modeling, control design, state estimation, a dynamic system simulation, a fault/anomaly simulation, *etc.*

At S240, a synthetic disturbance platform may inject at least one synthetic disturbance into the plurality of artificial intelligence models to create (for each of a plurality of monitoring nodes) a series of synthetic disturbance monitoring node values over time that represent simulated abnormal operation of the industrial asset. According to some embodiments, a robustness analysis is performed for the plurality of data-driven, dynamic artificial intelligence models to compute uncertainty bounds using Lipschitz bounds, one-sided Lipschitz bounds, incremental quadratic bounds, *etc.*

Some embodiments may provide dynamic system identification with single/multiple dynamic models. For example, different dynamic models may be built to synthesize a plant and control system depending on what data is available from various types of monitoring nodes. Dynamic models may be built in state-space using data-driven (black-box) or grey-box system identification techniques. Note that each dynamic model might be linear or nonlinear based on the fit to the data. The structures are of the model can be determined and parameters of the model can be estimated using any system identification method such as Prediction Error ("PE") minimization, Subspace State Space System Identification ("N4SID"), Eigen-structure Realization Algorithm ("ERA") or based on machine learning or deep learning methods such as feedforward neural networks, and recurrent neural networks (e.g., Long Short-Term Memory ("LSTM")) or Gaussian models. Each of the subsystem models may also be associated with reinforcement learning or imitation earning agents. Furthermore, each of the subsystem models may be wavelet-based neural networks, graph neural networks or physics-aware artificial intelligence (such as neural Ordinary Differential Equations ("ODEs")). Any compilation of the modeling methods and model types may be used as well. The order of the model might be selected, for example, automatically using Hankel norm analysis or any other model order selection technique such as machine/deep learning-based methods.

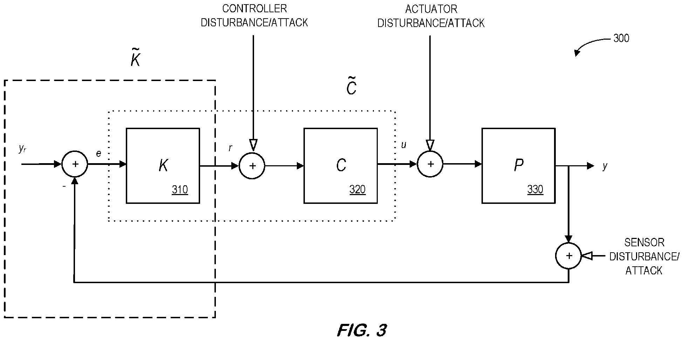

FIG. 3 illustrates a feedback loop configuration 300 and external perturbations that may be associated with some embodiments. In particular, information associated with a closed-loop feedback control system is collected from sensor nodes *y,* actuator nodes *u*, and controller nodes *r.* The signals *u* and *y* represent one or more actuators and sensors which are the input and outputs of a plant 330 (*P*). A first sub-controller 310 (*K*) and a second sub-controller 320 (*C*) form controller

$\tilde{C}$. The controller $\tilde{C}$ receives the error between the measurement feedback $y$ and the desired set-points $y_r$ and generates control commands $u$ (which are commanded to the actuators). Each model could be Single-Input, Single-Output ("SISO"), Single-Input, Multiple-Output ("SIMO", Multiple-Input, Single-Output ("MISO") or Multiple-Input, Multiple-Output ("MIMO") based on the number of available input-output data channels associated with the model. The monitoring nodes used for the purpose of some embodiments might be selected (based on domain knowledge) to be all or a subset of data nodes available.

If sensor monitoring nodes data y and actuator monitoring nodes $u$ are available, the plant 330 model $P$ may be identified using the inputs $u$ and outputs $y$ of the plant. Note that $P$ may be a sub-model of the true plant representing the dynamic relationship between the available sensor and actuator data. The data may be pre-processed (for detrending, denoising, outlier removal, *etc*.) before performing the system identification.

If data for the desired set-points corresponding to the sensor monitoring nodes are available, the controller model $\tilde{C}$ can be identified in a similar fashion as $P$. Alternatively, the data for the whole $\tilde{C}$ input-output might not be available (while data of some internal variables of the controller are available. These are the controller monitoring nodes, which are depicted as $r$. Using these monitoring nodes data, the controller $\tilde{C}$ may be split into two sub-controllers. The first sub-controller 310 $K$ receives the error and generates $r$ while the second sub-controller 320 $C$, receives $r$ and generates $u$. The first sub-controller 310 $K$ may represent the unknown portion of the controller $\tilde{C}$ for which the field data is not accessible (or may be thought of as the outer-loop supervisory control which provides set-points to the inner-loop controller). Using this controller splitting, a dynamic model for $C$ may be identified using its available input-output data $r$ and $u$, respectively, as shown FIG. 3.

Note that the unknown portion of the controller can be modeled assuming the unknown set-points are part of the system to be identified. This controller 310 $K$ can be identified using its input data $y$ and output data $r$ (which are available). Furthermore, multiple models might be identified for the plant 330 $P$ or each of the sub-controllers representing different modes of operation or different ambient conditions on different dates.

Such an approach assumes that historical data from the asset is available for a given set of monitoring nodes. Monitoring nodes may comprise, for example, sensor, actuator, and/or controller nodes (and any combination of these monitoring nodes may be possible when developing the model). The inputs and outputs of each of the subsystems may be selected based on domain knowledge or based on data-driven techniques, such as the automatic node selection and ranking techniques described in U.S. Patent Publication No. 2023/0093713.

While FIG. 3 shows the diagram for an interconnected feedback control loop, the techniques described herein are applicable to any interconnected systems, such as cascaded feedback loops, networks control systems, distributed systems, and multi-agent systems. There are two main approaches to model the three main blocks in FIG. 3, namely black-box modeling and grey-box modeling (and each of the blocks may be a linear or a nonlinear model). Note that the system partitioning in FIG. 3 is already, in essence, a grey-box structure (and this may be preferable having an overall black-box model end-to-end). It may provide more flexibility and more fidelity to the model as compared to just knowing the interconnections of the blocks (and it may also create attack injection points at the junctions of the blocks to enable actuator and controller attack simulations).

Table 1 shows a comparison between linear and nonlinear model types for data-driven digital twins:

| TABLE 1. Comparison of Linear and Nonlinear Model Types for Data-Driven Digital Twins | | | | | | |
|---|---|---|---|---|---|---|
| Model Type | Developmen t Complexity | Predictio n | Extrapolatio n | Stability | Controllabilit y | Observabilit y |
| Linear | Low to Medium | Good | Poor | Guarante e | Guarantee | Guarantee |
| Nonlinea r | Medium to High | Very Good | Good | Must be Enforced | No Guarantee | No Guarantee |

Both linear and nonlinear models can have good prediction accuracy, but nonlinear models are needed for extrapolating data (*e.g.,* for attack injection). It may be important that the models are stable (not just with respect to input-output stability, but also for the internal stability of the control loop). While this is guaranteed in linear system identification methods, it needs to be enforced in nonlinear system identification. Also, the controllability and observability of linear models are again guaranteed (in particular using the N4SID balanced realization) but they are not guaranteed for nonlinear models. However, this might not be a substantial issue because the digital twin is developed as simulation-oriented models not control-oriented models (that is, they are used for simulation purposes, not control design).

With respect to black-box models, the approach might be based on partitioning the system into the three main subsystems (as shown in FIG. 3) and then identifying each subsystem either as a black-box or a grey-box model. For a black-box model, one approach is to have a nonlinear implementation using deep Recurrent Neural Networks ("RNNs") or an attention-based model such as a Transformer. Whether or not a grey-box model is appropriate may depend on, for example, the domain, the number of IO), the system complexity, *etc.* For example, turbo machinery might use a black-box model for the electrical machine and reliable grey-box nonlinear ODE models are available. In either case, it may be important to do closed-loop system identification in order to have internal stability of the control loop. The subsystem models may be identified while they are connected.

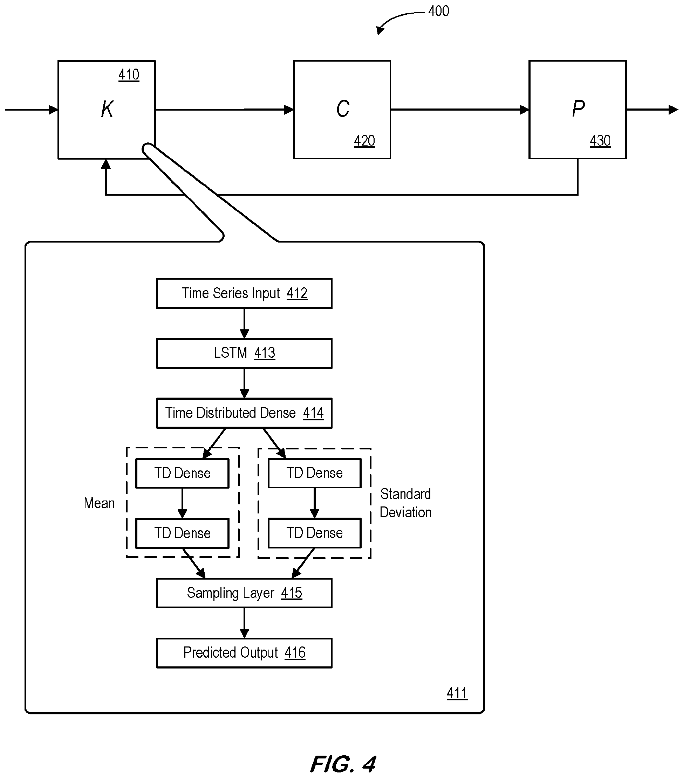

It may also be important that the field-data is properly labeled, and only "normal" data is used for digital twin modeling. FIG. 4 is an implementation 400 in accordance with some embodiments. The implementation 400 includes a first sub-controller 410 *K,* a second sub-controller 420 *C,* and a plant 430 *P* interconnected with a feedback loop. Each of *K, C,* and *P* may be simultaneously trained. For example, as shown in FIG. 4, *K* is trained via components 411 that include time series input 412, LSTM 413, time distribution dense 414 (for both mean and standard deviation), a sampling layer 415, and a predicted output 416. Note that *C* and *P* will also have components to create those models (and those components may be similar to or completely different from the components 411 used to create *K*). For example, a deep RNN (such as an LSTM model) might be replicated for each of the blocks 410, 420, 430 in the feedback loop with the only change being the number of output units of each block (using all available normal data from the field).

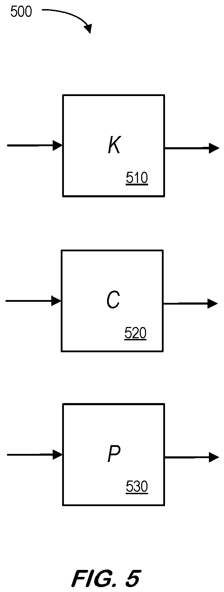

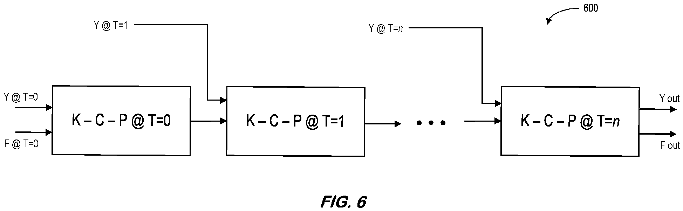

FIG. 5 is open loop system training 500 where the blocks include a first sub-controller 510 *K,* a second sub-controller 520 *C,* and a plant 530 *P.* FIG. 6 is closed loop system training 600 in accordance with some embodiments. For doing the close-loop system identification, the system may simultaneously train the connected blocks and unroll the feedback loop. Since this is an offline process, it can be done using the notion of time. In each iteration, the true output of the loop at the current time instance is injected into the loop while the models predict the future outputs along a prediction horizon. In the next iteration, the true output of the next time instance is fed into the models correcting their previous prediction. This will continue until the model training convergences with a prescribed prediction accuracy or maximum epoch number.

With respect to grey-box models, note that complete physical modeling of a nonlinear dynamic plant might be too complex or too expensive to implement. Moreover, some phenomena might not be competently understood and represented by a first-principle model. In many situations, parts of the system may be represented by data driven experimental or statistical models. On the other hand, pure statistical modeling might be too error prone or superficial to capture complex dynamics. Therefore, a combination of the white-box (physical) and black-box (statistical) modeling may be desired, comprising a grey-box modeling approach. The shade of the grey model depends on the required model fidelity, affordable complexity level, and the modeling cost. One of the challenges in grey-box modeling is the proper selection of the structure and parameter space for the statistical portion of the model. Symbolic methods can be utilized both for model structure selection and efficiently solving optimization problems associated with the parameter fitting. These techniques are also useful for simplification of complex models for control design purposes.

With respect to grey-box structural identifiability, note that it may be a fundamental problem of system identification to be able to decide if all free parameters of a model structure can be uniquely recovered from data (even before the data is analyzed). This is the issue of "global identifiability." Computer algebra has been proved to be useful in determining identifiability of general nonlinear structures. Moreover, it has been shown that any globally identifiable model structure can be rearranged (*e.g.,* using Ritt's algorithm) to a linear regression. This is, in a sense, a general convexification result for any identifiable estimation problem. A problem that arises in structural identifiability analysis is what to do with unidentifiable systems. A procedure for generating locally identifiable reparameterizations of unidentifiable nonlinear systems can be almost completely performed within an appropriate symbolic manipulation package. Structural identifiability techniques remove the parameters which are unidentifiable structurally (no matter how the experimental data is collected) and provide a refined model (with possibly fewer parameters) in which all parameters are identifiable. This extends the current capability of digital twin modeling and provides efficient algorithms with good numerical stability properties for nonlinear parameter estimation and optimization. It may also provide a tool for selecting proper structures for nonlinear grey-box modeling by ruling out the structures which are not globally identifiable.

When *a priori* information about the rules that govern a system either do not exist or are too complex, identification techniques may be used to build a model by only observing input-output data. In this case, the system is called a "black-box" approach since the internal behavior is unknown. On the other hand, in many physical systems, knowledge of mechanical, chemical, or electrical laws may help formulate a model (which is the fundamental tool for studying the system, either analytically or through simulations). However, no matter how deep the physical insights are, the parameters of any model present inaccuracies and also may change over time. Due to these perturbations, although the model is still valid, the numerical value of its parameters must be confronted with observed data. Such a system is called a "grey-box" since identification (usually including a stochastic model of measurement noise) must be applied to validate or adapt the *a priori* formulated model, which is regarded as a parametric model. Grey-box modeling reflects that both *a priori* and experimental knowledge are being incorporated into the model-building process (and both of them may exhibit uncertain character). Symbolic computation software systems offer interesting features that are useful for system identification. Symbolic calculations let the system compute statistical properties such as covariances, correlations and spectra as explicit functions of parameters. This may be useful for digital twin development as well as feature engineering, where theoretical calculations can parallel numerical computations of a signal's sample properties.

Another important use of symbolic computations is as a pre-processing tool for estimating parameters, for example, in connection with analytic computation of the sensitivity matrices and gradients of predictors in general model structures, in particular, for nonlinear systems. This opens possibilities for the user to define tailored model structures. Embodiments may use these methods of the integration of grey-box modeling within a data-driven digital twin approach for attack detection decision boundaries such as those described in U.S. Patent No. 10,671,060. For example, an analytical calculation of the sensitivity matrices (sensitivities of all state derivatives with respect to all state and noise variables) can significantly reduce the computational burden of parameter estimation which currently takes most of the time in grey-box identification. Furthermore, current grey-box identification tools may be either limited to pure nonlinear ODE systems or Differential-Algebraic system of Equations ("DAE") approaches with explicit algebraic equations.

With respect to robustness analysis and design, machine learning systems are susceptible to adversarial perturbations. Several examples exist that show how small but carefully designed perturbations can totally change the output of a neural network-based or other machine learning decision system. This vulnerability has limited deployment of such tools in safety critical and mission critical applications. The analysis of robustness of machine learning models (such as deep neural networks) against such adversaries remains a challenge. Some embodiments described herein provide a solid and mathematically rich framework to address this problem, using a special form of functional continuity called Lipschitz continuity. In a Lipschitz function, the variations of the function outputs are bounded by a scalar factor of the variations of its inputs, called the Lipchitz constant. Many nonlinear functions naturally fall into this category, including most activation functions used in neural networks (such as a Rectified Linear Unit ("ReLU"), sigmoid, tanh, *etc.*). Lipschitz functions have been successfully used for the analysis and design of robust nonlinear controllers and state estimators. Due to their theoretical guarantees, very recently they have also attracted the attention of the machine learning and deep learning community. An entire neural network can be modeled as a Lipschitz function, while the input features being the inputs to the function.

Although the Lipschitz functions provide a novel and meritorious formulation for robust deep learning, previous research has shown that they may lead to conservative bounds, preventing the exploitation of a system's full potential. Inspired by previous work on robust nonlinear observer design, embodiments described herein propose an extension of Lipschitz functions, namely one-sided Lipschitz functions, in evaluating the robustness of the models. Such an approach may provide two benefits: (1) generalization because one-sided Lipschitz functions are a superclass of Lipchitz functions; and (2) reduced conservatism because the one-sided Lipschitz formulation provides tighter bounds. The reduced conservatism can be utilized to guarantee robustness against larger perturbations or to expand the system's region of operation.

Furthermore, many modern machine learning tools use an ensemble of models to improve accuracy and robustness. Using a combination of Lipschitz and one-size Lipschitz formulations, embodiments may provide the flexibility to work on various machine leaning models, especially in an ensemble. While for some models in an ensemble, a Lipschitz bound might be good enough, for some others, a one-sided Lipschitz bound might be better. Numerical algorithms exist to compute Lipschitz and (very recently) one-sided Lipchitz constant. However, the computational burden of each formulation may vary for different models, which is another point of consideration.

With respect to robustness analysis, embodiments may utilize a theoretical framework for robustness analysis of machine learning models (such as deep neural networks) including ensemble models based on Lipschitz or one-sized Lipschitz functions and quantify the robustness, computational efficiency, efficacy, and conservatism of each formulation. This analysis may also provide insight about the contribution of each model in a diversified ensemble and point to robustness gaps.

With respect to robust learning, embodiments may address the design problem to synthesize robustness in ensemble models. The design problem can be cast into an efficient multi-objective optimization problem using linear matrix inequalities or semidefinite programing to optimize different robustness aspects of the system. While most of the current research is focused on input perturbations, this approach additionally establishes theorical robustness bounds against adversarial changes in the model structure or weights. The Lipschitz and one-sides Lipchitz bounds provide formal metrics for robustness against both input and structure/weight attacks.

With respect to directional robustness, robustness in certain directions might be more important. For example, a system might be more sensitive to changes in certain inputs compared to others or certain sensors might be more susceptible. Some embodiments may address directional robustness using matrix-type Lipschitz and one-sided Lipschitz constants. Note that some artificial intelligence models include several ensemble models for detection and localization. These ensemble models improve overall accuracy against different types of attacks and increase the operational coverage. Such systems naturally fit in the robustness analysis and design methods described herein.

With respect to a verified safe model and/or controller adaptation, the adaptations of each subsystem model and/or controller may be verified in real-time against safety requirements by any or both of these two mechanisms:

- verification against Lipschitz or one-sides Lipschitz bounds; and

- verification against known or learned invariances as described U.S. Patent Application Publication No.

2020/0389478.

Note that the controller can be model-based or data-driven.

Industrial control systems that operate physical systems (*e.g.,* associated with power turbines, jet engines, locomotives, autonomous vehicles, *etc.*) are increasingly connected to the Internet. As a result, these control systems have been increasingly vulnerable to threats, such as cyber-attacks (*e.g.,* associated with a computer virus, malicious software, *etc.*), that could disrupt electric power generation and distribution, damage engines, inflict vehicle malfunctions, *etc.* Current methods primarily consider attack detection in Information Technology ("IT," such as, computers that store, retrieve, transmit, manipulate data) and Operation Technology ("OT," such as direct monitoring devices and communication bus interfaces). Cyber-attacks can still penetrate through these protection layers and reach the physical "domain" as seen in 2010 with the Stuxnet attack. Such attacks can diminish the performance of a control system and may cause total shut down or catastrophic damage to a plant. Currently, no methods are available to automatically detect, during a cyber-incident, attacks at the domain layer where sensors, controllers, and actuators are located. In some cases, multiple attacks may occur simultaneously (*e.g.,* more than one actuator, sensor, or parameter inside control system devices might be altered maliciously by an unauthorized party at the same time). Note that some subtle consequences of cyber-attacks, such as stealthy attacks occurring at the domain layer, might not be readily detectable (*e.g.,* when only one monitoring node, such as a sensor node, is used in a detection algorithm). Existing approaches to protect an industrial control system, such as failure and diagnostics technologies, may not adequately address these problems - especially when multiple, simultaneous attacks occur since such multiple faults/failure diagnostic technologies are not designed for detecting stealthy attacks in an automatic manner.

Using a digital twin in connection with cyber attack protection is one of the use cases of the methods described herein (*e.g.,* broadly similar to U.S. Patent No. 10,671,060). According to some embodiments, simulated attacks are generated and injected into different monitoring nodes. Note that in other use cases, other types of synthetic disturbances might be injected instead. Different types of attacks can be considered here with different magnitudes and patterns. Attacks could, for example, add a constant or time-varying bias into the signals, spoof the signal, mask and replay it, *etc.* Any combinations of sensor/actuator/controller nodes may be considered as the attack nodes.

With respect to normal and attack data points collection, normal time series of the monitoring nodes might be readily available from the field data. If additional normal data points are needed, they can be synthesized using the identified models. Attack time series may be collected by injecting the attacks into different (and potentially multiple attacks at a time) attack nodes and simulating with the identified dynamic models.

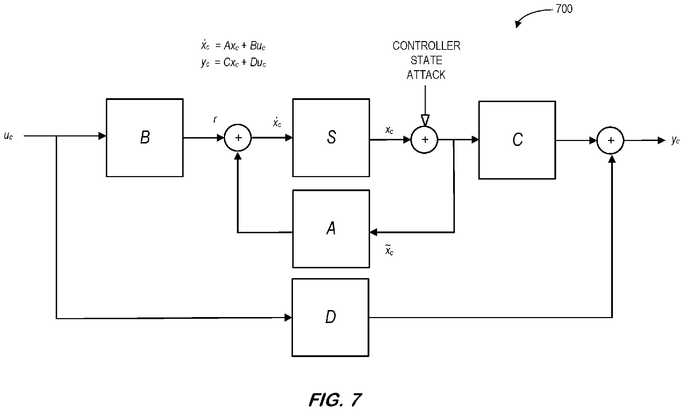

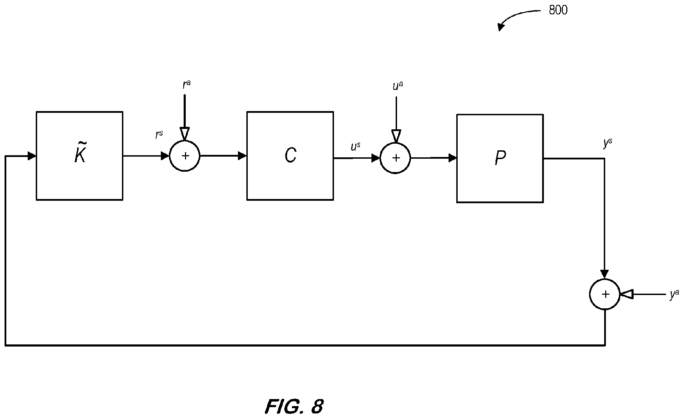

Each identified dynamic model can be simulated independently or in an interconnected fashion with other identified dynamic models. For example, FIG. 7 illustrates 700 attacks injected into controller states (with models arranged in a closed loop). As another example, FIG. 8 illustrates 800 an example of models running separately. Note that inputs and outputs might be defined as follows:

- $y_f$, $r_f$, $u_f$: field data

- $y_s$, $r_s$, $u_s$: synthetic data

- $y_a$, $r_a$, $u_a$: injected attacks

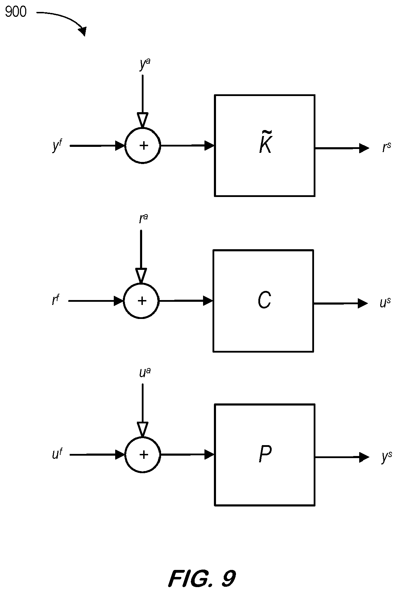

Note that various configurations are possible. For example, the system may start with an initial condition given from the field data and simulate the fully interconnected feedback loop comprising $\tilde{K}$, $C$, $P$, output of each feeding to the input of the other while attacks are injected into different nodes. Alternatively, fully independent simulations might be done, by separately inputting each model from the recorded field data along with the injected attacks and recording its outputs. Any other combination of partial interconnections is also possible as illustrated in FIGS. 8 and 9. If the exogenous set-points $y_r$ are available, set-point attacks might be also injected and simulated according to some embodiments.

With respect to decision boundary generation, once the normal and attack time series data (both synthetic and field data) are collected, the features may be extracted from the data to generate normal and attack data points in the feature space. The term "feature" may refer to, for example, mathematical characterizations of data. Examples of features as applied to data might include the maximum and minimum, mean, standard deviation, variance, settling time, Fast Fourier Transform ("FFT") spectral components, linear and nonlinear principal components, independent components, sparse coding, deep learning, *etc.* The type and number of features for each monitoring node might be optimized using domain-knowledge, feature engineering, or ROC statistics. The local features for each monitoring node may be stacked to create the global feature vector. The features may be normalized, and the dimension of the global feature vector can then be further reduced using any dimensionality reduction technique such as PCA. The features may be calculated over a sliding window of the signal time series. The length of the window and the duration of slide might be determined, for example, from domain knowledge and inspection of the data or using batch processing.

The extracted features may then be used to train a classification decision boundary using machine learning. Any classification method might be used, such as SVM, deep learning neural networks, or extreme learning machines with linear or nonlinear kernels. The decision boundaries may be learned for the global feature vectors or for each individual monitoring node using corresponding local feature vectors. The feature data might be clustered as a separate decision boundaries learned for each data cluster. The global decision boundary (or boundaries) may be used in the global attack detection, and the local decision boundaries may be used for attack localization.

In addition, if a controller model $C$ or $\tilde{K}$ is identified, the controller state attacks might also be synthesized as shown in FIG. 7 where $y_c$ and $u_c$ correspond to outputs and inputs to the controller $C$. Note that if access to both $y_r$ and r are available, the system may still want to split the controller and identify $C$ and $\tilde{K}$ separately, rather than identifying $C$ as a whole, to be able to still inject attacks into r.

With respect to normal and anomaly/fault/attack data points collection, normal time series of the monitoring nodes may be readily available from the field data. If additional normal data points are needed, they can be synthesized using the identified models. Attack time series may be collected by injecting the attacks into different (and potentially multiple attacks at a time) attack nodes and simulating with the identified dynamic models. Each identified dynamic model can be simulated independently or in an interconnected fashion with other identified dynamic models. Various configurations are possible here. For example, one may start with an initial condition given from the field data and simulate the fully interconnected feedback loop comprising $\tilde{K}, C, P,$ with the output of each feeding to the input of the other while attacks are injected into different nodes. Alternatively, fully independent simulations might be done by separately inputting each model from the recorded field data along with the injected attacks and recording its outputs. Any other combination of partial interconnections is also possible. FIGS. 8 and 9 show fully interconnected 800 and fully independent 900 simulation configurations. If the exogenous set-points $y_r$ are available, set-point attacks might also be injected and simulated.

The extracted features may be used to train a classification decision boundary using machine learning. Any classification method might be used, such as a two-class or multi-class Support Vector Machine ("SVM"), deep learning neural networks, or extreme learning machines with linear or nonlinear kernels. The decision boundaries can be learned for the global feature vectors or for each individual monitoring node using their corresponding local feature vectors. The feature data might be clustered as a separate decision boundaries learned for each data cluster. The global decision boundary or boundaries may be used in the global attack detection, and the local decision boundaries may be used for attack localization.

Thus, embodiments may provide attack detection and localization (as well as other use cases) applicable to systems where tuned high-fidelity models are not available. This allows the algorithm to be applied to new units and legacy units, providing improved detection accuracy, flexibility, and cost effectiveness. Moreover, embodiments may enable attack synthesis without having high-fidelity models which normally require time and cost to develop. Also, embodiments may enable supervised classification which outperforms semi-supervised classification based on using normal only data. Embodiments may address un-met needs for legacy systems, such as power generation assets.

Some embodiments were tested using actual field data collected from a gas turbine without using any previous model. The frameworks described herein are flexible and can be configured to various sets of available data. This simulation is for illustration only and the invention is not limited to the specifics of this simulation.

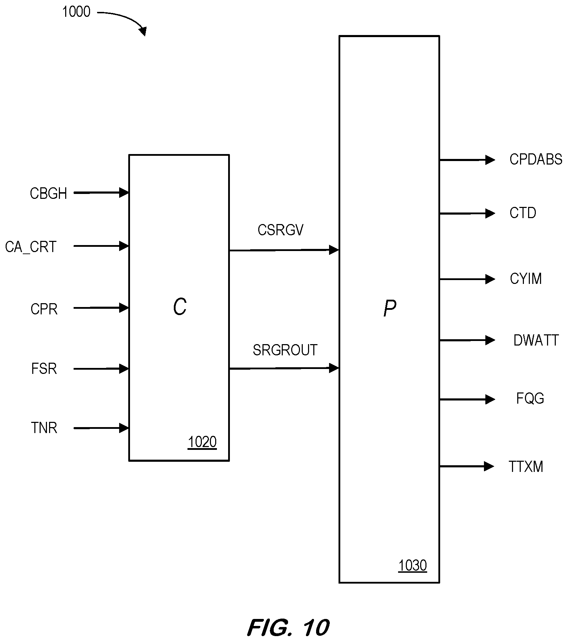

FIG. 10 illustrates 1000 sensor, actuator, and controller nodes associated with $C$ 1020 and $P$ 1030. The system has 5 controller nodes r (CGBH, CA_CRT, CPR, FSR, and TNR), 2 actuator nodes u (CSRGV and SRGROUT), and 6 sensor nodes y (CPDABS, CTD, CTIM, DWATT, FQG, and TTXM) as shown in FIG. 10. Embodiments identified $\tilde{K}, C,$ and P models using a subspace method N4SID and the order of each model was selected automatically using Hankel norm analysis. The models were identified as Liner Time-Invariant ("LTI") state spaces with a tuned tradeoff between prediction error and stability. The properties of the models are summarized in Table 2:

| TABLE 2. Properties of Identified Models | | | | | |
|---|---|---|---|---|---|
| Model | Order | Number of Input Channels | Number of Output Channels | Fit to Data Percent | Final Prediction Error |
| $\tilde{K}$ | 10 | 6 | 5 | 93.3, 99.89, 99.61, 98,29, 97.87 | 8.22e-8 |
| $C$ | 5 | 5 | 2 | 99.45, 97.21 | 1.464e-06 |
| $P$ | 10 | 2 | 6 | 97.79, 98.7, 91.07, 97.03, 86.82, 99.56 | 1.095e-09 |
| Goodness of fit was computed as Fit = 1 - NMSE, where NMSE is the Normalized Mean Square Error for each output channel and the Final Prediction Error ("FPE") is Akaike's FPE. The models were directly identified in the discrete-time domain using the same sampling time of the data (1 second). | | | | | |

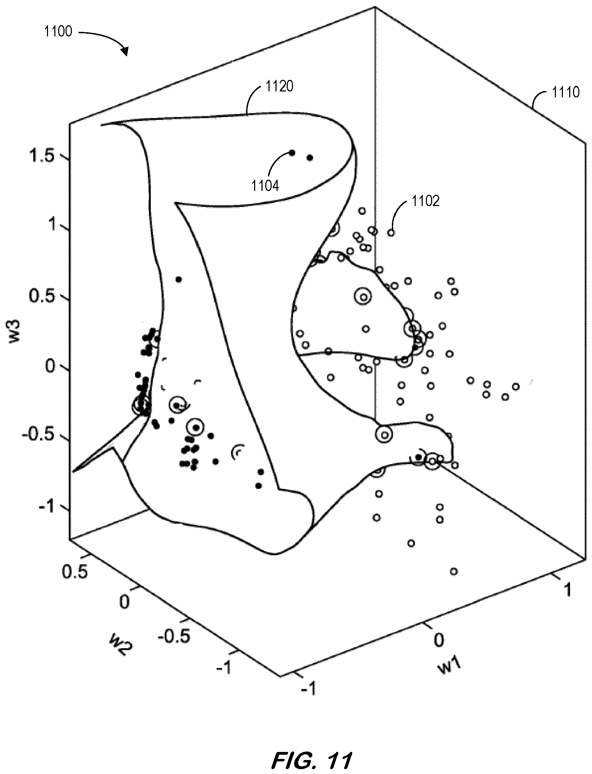

Three monitoring nodes were selected as the attacked nodes: one sensor node, one actuator node, and one controller node. The attacks are injected using Pseudo-Random Binary Sequence ("PRBS") patterns, with each attack being a constant bias with a positive and a negative amplitude based on the value of the PRBS signal. The features were calculated over a window of 45 seconds sliding by 1 second. Five local features were selected for each monitoring node. Since there were 13 monitoring nodes, this resulted in 65 global features. The length of the global feature vector was then reduced to the first 3 principal components using PCA analysis. Ignoring initial transients, this resulted in 1824 points in the feature space (912 normal points and 912 attack points). This example collected the feature data through a long single run of 2000 seconds. In general, however, multiple shorter runs might be used instead. In addition, the system extracted feature data to train a classification boundary using SVM with Radial Basis Function ("RBF") kernel. FIG. 11 illustrates 1100 a three-dimensional graph 1110 showing a possible decision boundary 1120 based on normal points 1102 and abnormal points 1104.

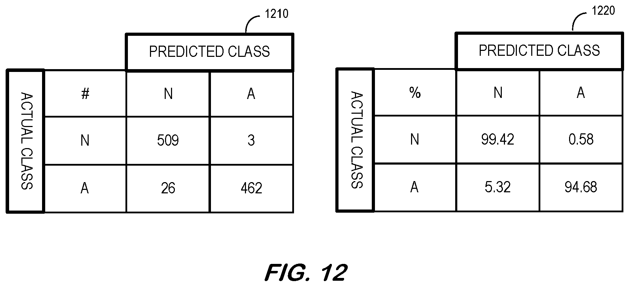

To evaluate a boundary, an independent set of normal and attack synthetic data may be generated and tested against the decision boundary. The total size of the evaluation data set was 1000, which included 512 normal cases and 488 attack cases. The number of cases in each class was selected randomly. The evaluation results are summarized in FIG. 12 which includes a table 1210 for normal cases and a table 1220 for attack cases. As can be seen, the false positive rate was 0.58% and the false negative rate was 5.32%.

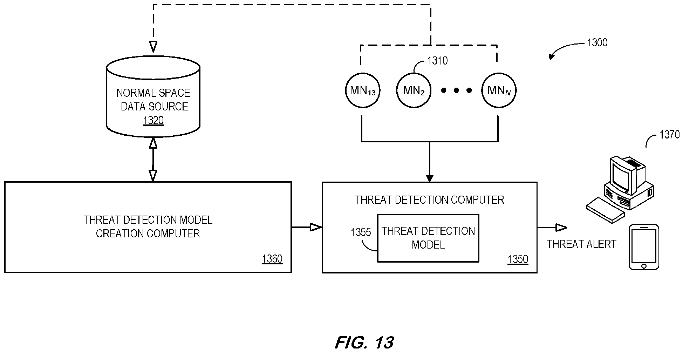

Thus, embodiments may improve the ability to detect cyber-attacks and faults associated with an industrial asset (as well as facilitate other use cases). Note that industrial control systems that operate physical systems are increasingly connected to the Internet. As used herein, the term "industrial" might be associated with any system that is connected to an external source, such as the Internet in the case of a cyber-physical system or locally operating an air-gapped physical system. As a result, these control systems have been increasingly vulnerable to threats and, in some cases, multiple attacks may occur simultaneously. Protecting an asset may depend on detecting such attacks as well as naturally occurring faults and failures. Existing approaches to protect an industrial control system, such as failure and diagnostics technologies, may not adequately address these threats - especially when multiple, simultaneous attacks occur. It would therefore be desirable to protect an industrial asset from cyber threats in an automatic and accurate manner. FIG. 13 is a high-level architecture of a system 1300 that might be used to protect an asset. The system 1300 may include a "normal space" data source 1320 storing, for each of a plurality of monitoring nodes 1310, a series of normal values over time that represent normal operation of an industrial asset (*e.g.,* collected from actual monitoring node 1310 data as illustrated by the dashed line in FIG. 13).

Information from the normal space data source 1320 may be provided to a threat detection model creation computer 1360 that uses this data to create a decision boundary (that is, a boundary that separates normal behavior from abnormal behavior) in accordance with any of the embodiments described herein (*e.g.,* using a digital twin formed from a plurality of interconnected and simultaneously trained artificial intelligence models). The decision boundary may then be used by a threat detection computer 1350 executing a threat detection model 1355. The threat detection model 1355 may, for example, monitor streams of data from the monitoring nodes 1310 comprising data from sensor nodes, actuator nodes, and/or any other critical monitoring nodes (*e.g.,* monitoring nodes $MN_i$ through $MN_N$) and automatically output a threat alert (*e.g.,* indicating that operation of the industrial asset is normal or abnormal) to one or more remote monitoring devices 1370 when appropriate (*e.g.,* for display to a user). As used herein, the term "automatically" may refer to, for example, actions that can be performed with little or no human intervention. According to some embodiments, information about detected attack or fault may be transmitted back to an industrial control system.

As used herein, devices, including those associated with the system 1300 and any other device described herein, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The threat detection model creation computer 1360 may store information into and/or retrieve information from various data stores, such as the normal space data source 1320. The various data sources may be locally stored or reside remote from the threat detection model creation computer 1360. Although a single threat detection model creation computer 1360 is shown in FIG. 13, any number of such devices may be included. Moreover, various devices described herein might be combined according to embodiments of the present invention. For example, in some embodiments, the threat detection model creation computer 1360 and normal space data source 1320 might comprise a single apparatus. The threat detection model creation computer 1360 and or threat detection computer 1350 functions may be performed by a constellation of networked apparatuses, in a distributed processing or cloud-based architecture.

A user may access the system 1300 via one of the monitoring devices 1370 (*e.g.,* a Personal Computer ("PC"), tablet, or smartphone) to view information about and/or manage attack and system information in accordance with any of the embodiments described herein. In some cases, an interactive graphical display interface may let a user define and/or adjust certain parameters (*e.g.,* attack detection trigger levels or model configurations) and/or provide or receive automatically generated recommendations or results from the threat detection model creation computer 1360 and/or the threat detection computer 1350.

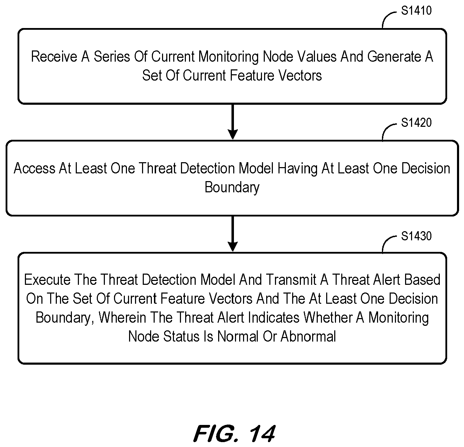

The decision boundary associated with the threat detection model can be used to detect cyber-attacks. For example, FIG. 14 is an industrial asset protection method that might be implemented. The flow charts described herein do not imply a fixed order to the steps, and embodiments of the present invention may be practiced in any order that is practicable. Note that any of the methods described herein may be performed by hardware, software, or any combination of these approaches. For example, a computer-readable storage medium may store thereon instructions that when executed by a machine result in performance according to any of the embodiments described herein.

At S1410, the system may receive, from a plurality of monitoring nodes, a series of current values over time that represent a current operation of an industrial asset. The system may also generate, based on the received series of current values, a set of current feature vectors. At S 1420, a threat detection model may be accessed including at least one decision boundary (*e.g.,* created using a digital twin formed from a plurality of interconnected and simultaneously trained artificial intelligence models). At S1430, the model may be executed, and a threat alert may be transmitted based on the set of current feature vectors and the decision boundary when appropriate (*e.g.,* when a cyber-attack is detected). According to some embodiments, one or more response actions may be performed when a threat alert is transmitted. For example, the system might automatically shut down all or a portion of the industrial asset (*e.g.,* to let the detected potential cyber-attack be further investigated). As other examples, one or more parameters might be automatically modified, a software application might be automatically triggered to capture data and/or isolate possible causes, *etc.*

When available, a system may take advantage of the physics of an industrial asset by learning a priori from tuned high fidelity equipment models and/or actual "on the job" data to detect single or multiple simultaneous adversarial threats to the system. Moreover, monitoring node data may be converted to features using advanced feature-based methods, and the real-time operation of the control system may be monitoring in substantially real-time. Abnormalities may be detected by classifying the monitored data as being "normal" or "abnormal" (*e.g.,* "attacked"). This decision boundary may be constructed in feature space using dynamic models and may help enable early detection of vulnerabilities (and potentially avert catastrophic failures) allowing an operator to restore the control system to normal operation in a timely fashion. Note, however, that in many cases a physics-based model of an industrial asset might not be readily available.

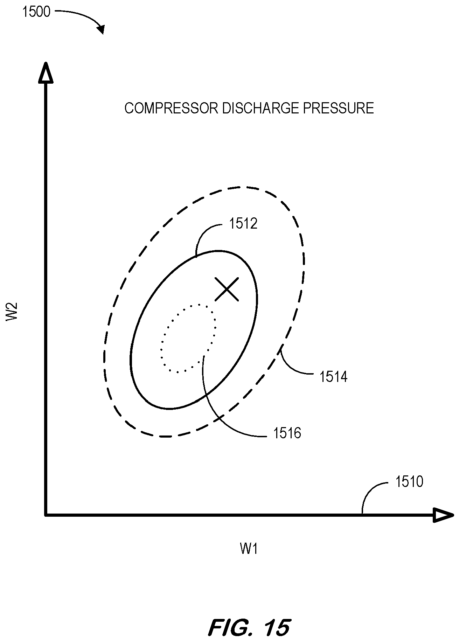

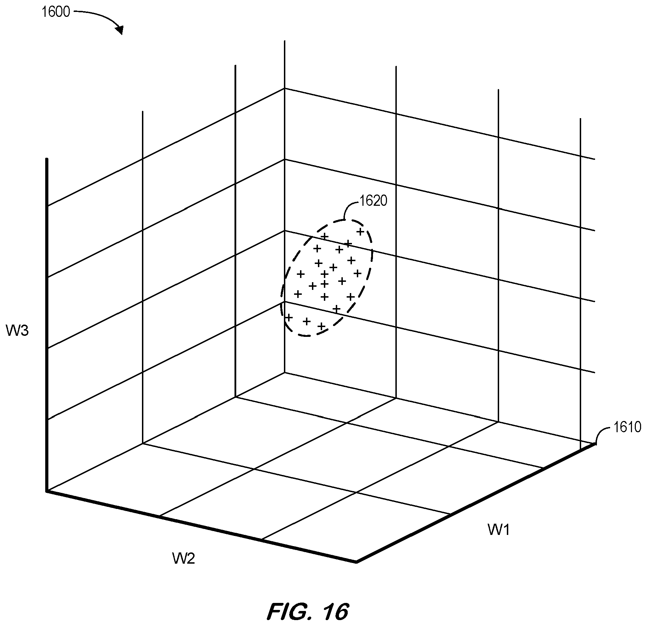

FIGS. 15 and 16 illustrate features, feature vectors, and decision boundaries in accordance with some embodiments. In particular, FIG. 15 illustrates 1500 boundaries and feature vectors for a monitoring node parameter in accordance with some embodiments. a graph 1510 includes a first axis representing value weight 1 ("w1"), a feature 1, and a second axis representing value weight 2 ("w2"), a feature 2. Values for w1 and w2 might be associated with, for example, outputs from a Principal Component Analysis ("PCA") performed on input data. PCA might be one of the features that might be used by the algorithm to characterize the data, but note that other features could be leveraged. The graph 1510 illustrated in FIG. 15 represents compressor discharge temperature for a gas turbine but other values might be monitored instead (*e.g.,* compressor pressure ratio, compressor inlet temperature, fuel flow, generator power, gas turbine exhaust temperature, *etc.*). The graph 1510 includes an average boundary 1512 (solid line), minimum boundary 1514 (dotted line), and maximum boundary 1516 (dashed line) and an indication associated with current feature location for the monitoring node parameter (illustrated with an "X" on the graph 1510). As illustrated in FIG. 15, the current monitoring node location is between the minimum and maximum boundaries (that is, the "X" is between the dotted and dashed lines). As a result, the system may determine that the operation of the industrial asset is normal (and no attack or fault is being detected for that monitoring node).

FIG. 16 illustrates 1600 three dimensions of threat node outputs in accordance with some embodiments. In particular, a graph 1610 plots monitoring node outputs during normal operation ("+") in three dimensions, such as dimensions associated with PCA: w1, w2, and w3. Moreover, the graph 1610 includes a dashed line indication of a normal operating space decision boundary 1620 (*e.g.,* created using a digital twin formed from a plurality of interconnected and simultaneously trained artificial intelligence models). Note that because the boundary 1620 was constructed using only normal space data ("+") (and no attack data), it might be closely tied to the normal outputs. As a result, even a small deviation from normal outputs in the future might result in a "false positive" threat alert.

Note that an appropriate set of multi-dimensional feature vectors, which may be extracted automatically (*e.g.,* via an algorithm) and/or be manually input, might comprise a good predictor of measured data in a low dimensional vector space. According to some embodiments, appropriate decision boundaries may be constructed in a multi-dimensional space using a data set which is obtained via scientific principles associated with Design of Experiments ("DoE") techniques. Moreover, multiple algorithmic methods (*e.g.,* using two-class or multi-class support vector machines or machine learning techniques) may be used to generate decision boundaries. Since boundaries may be driven by measured data, defined boundary margins may help to create a threat zone in a multi-dimensional feature space. Moreover, the margins may be dynamic in nature and adapted based on a transient or steady state model of the equipment and/or be obtained while operating the system as in self-learning systems from the incoming data stream. According to some embodiments, a training method may be used for supervised learning to teach decision boundaries. This type of supervised learning may take into account an operator's knowledge about system operation (*e.g.,* the differences between normal and abnormal operation).

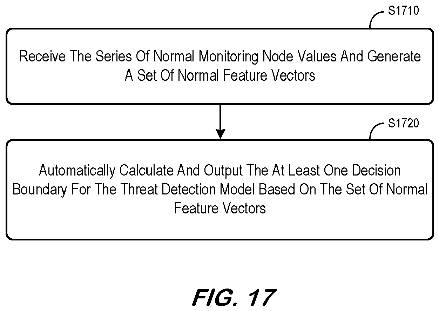

FIG. 17 illustrates a model creation method that might be performed by some or all of the elements of the system 1300 described with respect to FIG. 13. At S1710, the system may retrieve, for each of a plurality of monitoring nodes, a series of normal values over time that represent normal operation of the industrial asset and a set of normal feature vectors may be generated. The series of normal values might be obtained, for example, by running DoE on an industrial control system associated with a power turbine, a jet engine, a locomotive, an autonomous vehicle, *etc.* At S1720, a decision boundary may be automatically calculated and output for a threat detection model based on the sets of normal feature vectors (*e.g.,* using a digital twin formed from a plurality of interconnected and simultaneously trained artificial intelligence models). According to some embodiments, the decision boundary might be associated with a line, a hyperplane, a nonlinear boundary separating normal space from attacked space, and/or a plurality of decision boundaries. In addition, note that the threat detection model might be associated with the decision boundary, feature mapping functions, and/or feature parameters.

Thus, a system may classify the status of an industrial control system having a plurality of monitoring nodes (including sensor, actuator, and controller nodes) as being normal or under a cyber-attack. This may enable tailored, resilient, and fault-tolerant control remedies against cyber-attacks and faults.

Note that many different types of features may be utilized in accordance with any of the embodiments described herein, including principal components (weights constructed with natural basis sets) and statistical features (*e.g.,* mean, variance, skewness, kurtosis, maximum, minimum values of time series signals, location of maximum and minimum values, independent components, *etc.*). Other examples include deep learning features (*e.g.,* generated by mining experimental and/or historical data sets) and frequency domain features (*e.g.,* associated with coefficients of Fourier or wavelet transforms). Embodiments may also be associated with time series analysis features, such as cross-correlations, auto-correlations, orders of the autoregressive, moving average model, parameters of the model, derivatives and integrals of signals, rise time, settling time, neural networks, *etc.* Still other examples include logical features (with semantic abstractions such as "yes" and "no"), geographic/position locations, and interaction features (mathematical combinations of signals from multiple monitoring nodes and specific locations). Embodiments may incorporate any number of features, with more features allowing the approach to become more accurate as the system learns more about the physical process and threat. According to some embodiments, dissimilar values from monitoring nodes may be normalized to unit-less space, which may allow for a simple way to compare outputs and strength of outputs.

Note that PCA information may be represented as weights in reduced dimensions. For example, data from each monitoring node may be converted to low dimensional features (*e.g.,* weights). According to some embodiments, monitoring node data is normalized as follows:

$$S_{normalized}(k) = \frac{S_{nominal}(k) - S_{original}(k)}{\bar{S}_{nominal}}$$

where S stands for a monitoring node quantity at "*k*" instant of time. Moreover, the output may then be expressed as a weighted linear combination of basis functions as follows:

$$S = S_0 + \sum_{j=1}^{N} w_i \Psi_j$$

where $S_0$ is the average monitoring node output with all threats, $w_j$ is the $j^{th}$ weight, and $\Psi_j$ is the j$^{th}$ basis vector. According to some embodiments, natural basis vectors are obtained using a covariance of the monitoring nodes' data matrix. Once the basis vectors are known, the weight may be found using the following equation (assuming that the basis sets are orthogonal):

$$w_j = (S - S_0)^T \Psi_j$$

Note that weights may be an example of features used in a feature vector.

Thus, once the observed quantities from monitoring nodes are expressed in terms of feature vectors (*e.g.,* with many features), the feature vectors may then be used as points in a multi-dimensional feature space. During real-time threat detection, decisions may be made by comparing where each point falls with respect to a decision boundary that separates the space between two regions (or spaces): abnormal ("attack") space and normal operating space. If the point falls in the attack space, the industrial asset is undergoing an abnormal operation such as during a cyber-attack. If the point falls in the normal operating space, the industrial asset is not undergoing an abnormal operation such as during a cyber-attack. An appropriate decision zone with boundaries may be constructed using data sets as described herein with high fidelity models. For example, two-class or multi-class support vector machines may be used with a kernel function to construct a decision boundary. According to some embodiments, deep learning techniques may also be used to construct decision boundaries.

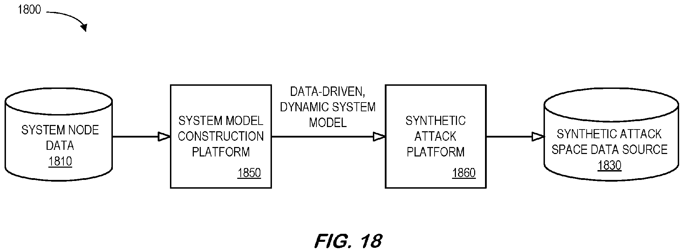

If attack space data could be used (in addition to the normal space data) to create a decision boundary for a threat detection model the accuracy of the model might be improved. In many cases, however, such attack space data is not available and there is no physics-based model that can be used to simulate cyber-attack results. Thus, FIG. 18 is a high-level block diagram of a system 1800 in accordance with some embodiments. The system includes a system node data store 1810 that contains system node data associated with an industrial asset (*e.g.,* a description of each node, data values collected for each node, how nodes are connected or inter-related, *etc.*). The system 1800 also includes a system model construction platform 1850, coupled to the system node data store, to receive the system node data associated with the industrial asset and to automatically construct a data-driven, dynamic system model for the industrial asset based on the received system node data. The data-driven, dynamic system model may then be provided to a synthetic attack platform 1860 that injects at least one synthetic attack into the data-driven, dynamic system model to create, for each of a plurality of monitoring nodes, a series of synthetic attack monitoring node values over time that represent simulated attacked operation of the industrial asset. These values may then be stored in a synthetic attack space data store 1830 (*e.g.,* to be used along with normal space data to create an appropriate decision boundary for a threat detection model).

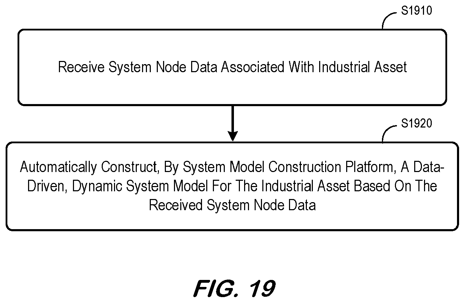

FIG. 19 is a data-driven model creation method according to some embodiments. At S 1910, the system may receive system node data associated with the industrial asset. At S 1920, the system may automatically construct a data-driven, dynamic system model for the industrial asset based on the received system node data. According to some embodiments, the data-driven, dynamic system model is built in state-space and using one of black-box and grey-box system identification techniques. Moreover, note that a plurality of data-driven, dynamic system models might be automatically constructed and at least one of the data-driven, dynamic system models might be associated with a plant model of the industrial asset, a controller model of the industrial asset, and/or a sub-controller model of the industrial asset.

According to some embodiments, the data-driven, dynamic system model is associated with a linear or nonlinear model. Moreover, the data-driven, dynamic system model might be associated with a model order that was automatically selected by the system model construction platform (*e.g.,* via a Hankel norm analysis). According to some embodiments, parameters of the data-driven, dynamic system model are estimated via a system identification method associated with PE minimization, subspace methods, N4SID, ERA techniques, *etc.* Note that the data-driven, dynamic system model might be associated with, for example, a SISO model, a SIMO model, a MISO model, and/or a MIMO model.

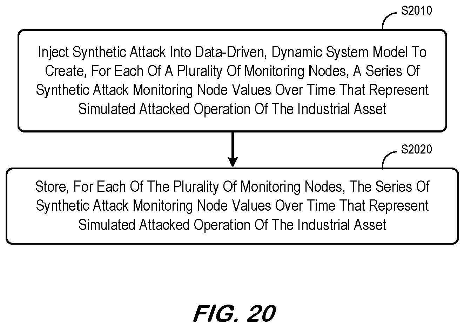

FIG. 20 is a synthetic attack injection method in accordance with some embodiments. At S2010, at least one synthetic attack may be injected into the data-driven, dynamic system model to create, for each of a plurality of monitoring nodes, a series of synthetic attack monitoring node values over time that represent simulated attacked operation of the industrial asset. At S2020, the system may store, for each of the plurality of monitoring nodes, the series of synthetic attack monitoring node values over time that represent simulated attacked operation of the industrial asset.

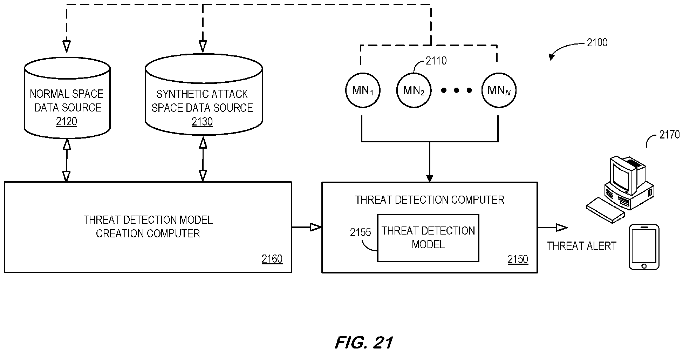

The synthetic attack monitoring node values can then be used to improve the operation of the system 1300 described with respect to FIG. 13. For example, FIG. 21 is a high-level architecture of a system 2100 in accordance with some embodiments. The system 2100 may include a "normal space" data store 2120 and a "synthetic attack space" data store 2130. The normal space data store 2120 might store, for each of a plurality of monitoring nodes 2110, a series of normal values over time that represent normal operation of an industrial asset (*e.g.,* collected from actual monitoring node 2110 data as illustrated by the dashed line in FIG. 21). The synthetic attack space data store 2130 might store, for each of the monitoring nodes 2110, a series of attacked values that represent a simulated attacked operation of the industrial asset (*e.g.,* based on data-driven models).

Information from the normal space data store 2120 and the synthetic attack space data store 2130 may be provided to a threat detection model creation computer 2160 that uses this data to create a decision boundary (that is, a boundary that separates normal behavior from abnormal or attacked behavior). The decision boundary may then be used by a threat detection computer 2150 executing a threat detection model 2155. The threat detection model 2155 may, for example, monitor streams of data from the monitoring nodes 2110 comprising data from sensor nodes, actuator nodes, and/or any other critical monitoring nodes (*e.g.,* monitoring nodes MNi through $MN_N$) and automatically output a threat alert (*e.g.,* indicating that operation of the industrial asset is normal or attacked) to one or more remote monitoring devices 2170 when appropriate (*e.g.,* for display to a user).

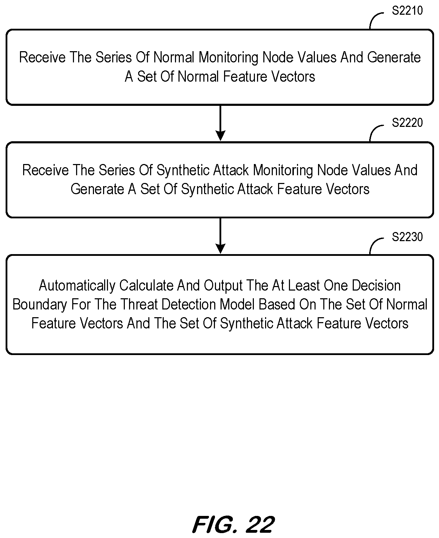

FIG. 22 illustrates a model creation method that might be performed by some or all of the elements of the system 2100 described with respect to FIG. 21. At S2210, the system may retrieve, for each of a plurality of monitoring nodes, a series of normal values over time that represent normal operation of the industrial asset and a set of normal feature vectors may be generated. At S2220 the system may retrieve, for each of the plurality of monitoring nodes, a series of synthetic attack values over time that represent attacked operation of the industrial asset and a set of attacked feature vectors may be generated. At S2230, a decision boundary may be automatically calculated and output for a threat detection model based on the sets of normal feature vectors, attacked feature vectors, and fault feature vectors. According to some embodiments, the decision boundary might be associated with a line, a hyperplane, a nonlinear boundary separating normal space from attacked space, and/or a plurality of decision boundaries.

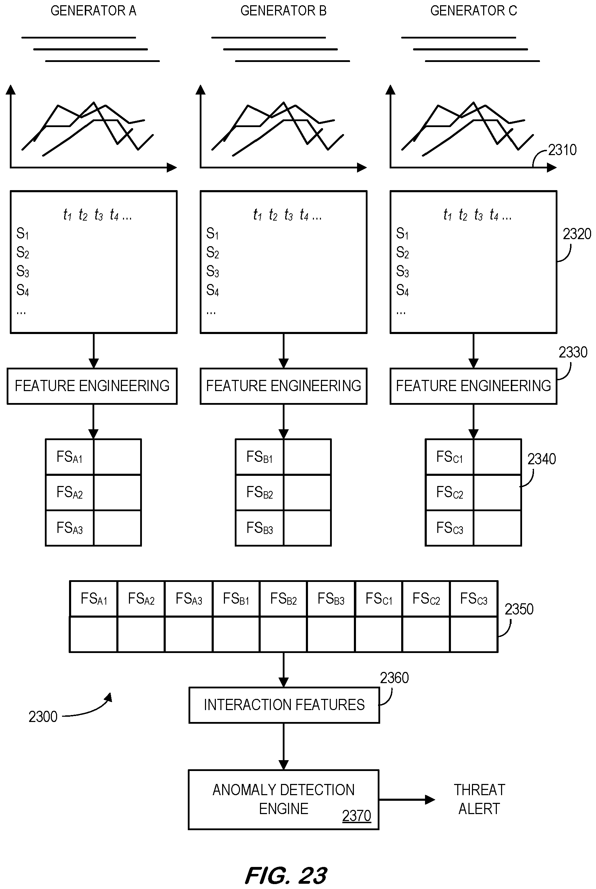

According to some embodiments, the synthetic attack monitoring node values may be converted into local features (*e.g.,* related to a single node) and/or global features (*e.g.,* associated with the industrial asset as a whole). For example, FIG. 23 is an example of a global threat protection system 2300 in accordance with some embodiments. In particular, the system includes three generators (A, B, and C) and batches of values 2310 from monitoring nodes are collected for each generated over a period of time (*e.g.,* 30 to 50 seconds). According to some embodiments, the batches of values 2310 from monitoring nodes overlap in time. The values 2310 from monitoring nodes may, for example, be stored in a matrix 2320 arranged by time ($t_1$, $t_2$, *etc.*) and by type of monitoring node (Si, $S_2$, *etc.).* Feature engineering components 2330 may use information in each matrix 2320 to create a feature vector 2340 for each of the three generators (*e.g.,* the feature vector 2340 for generator C might include FSci, $FSc_2$, *etc.).* The three feature vectors 2340 may then be combined into a single global feature vector 2350 for the system 2300. Interaction features 2360 may be applied (*e.g.,* associated with A*B*C, A+B+C, *etc.*) and an anomaly detection engine 2370 may compare the result with a decision boundary and output a threat alert when appropriate.

Note that, by way of example only, the industrial asset might be associated with a gas turbine. In this case, the operating conditions might be associated with gas turbine loads and/or gas turbine temperatures. Other gas turbine parameters might include: (i) an operating mode, (ii) an external condition, (iii) a system degradation factor, (iv) fuel input, (v) a turbine inlet temperature, (vi) a turbine inlet pressure, (vii) a turbine power, (viii) a turbine speed, (ix) compressor discharge pressure, (x) compressor discharge temperature, (xi) fuel flow, and/or (xii) turbine exhaust temperature. As another example, the industrial asset might be associated with a computer network and the operating conditions may be associated with information packet transmission characteristics (*e.g.,* packet size, latency, *etc.*).

Thus, embodiments may provide a system for the construction of decision boundaries for cyber-attack detection in industrial control systems using historical data collected from the asset. Note that embodiments do not rely on the availability of any model of the asset and (thus it may be applicable to any new asset from any manufacturer as long as access to time series data is available). Embodiments may use collected field data for normal operation to reconstruct synthetic data points in the abnormal operating space using feature engineering. Having abnormal operating space may help provide a robust decision boundary (which can be difficult to obtain when access to high fidelity models is not available). According to some embodiments, attacks may be synthesized and injected into sensor, actuator, and/or controller monitoring nodes of data-driven identified plant and controller models. If additional normal data points are needed during boundary computation, embodiments may also synthesize them using the identified models. The classification decision boundary may be trained using the synthetic data in feature space. According to some embodiments, the system is fully reconfigurable and can be applied to fully or partially available data collected from any number of sensor/actuator/controller monitoring nodes. Some embodiments may improve detection accuracy (*i.e.,* reduce false positive and false negative rates) by enabling supervised classification which outperforms semi-supervised classification based on using only normal data.

In many cases, historical data from an asset is available for a given set of monitoring nodes. Monitoring nodes may be some or all sensors, actuators or controller nodes. Note that any combination of these monitoring nodes may be used to develop a data-driven, dynamic system model. Some particular examples of embodiments of the present invention will now be provided. In particular, embodiments might be associated with: (1) dynamic system identification with single or multiple dynamic models, (2) synthetic attack injections, (3) normal and attack data points collection, and (4) decision boundary generation. With respect to dynamic system identification with single/multiple dynamic models, based on the type of the monitoring nodes for which field data is available, different dynamic models may be built to synthesize plant and control system data. According to some embodiments, dynamic models are built in state-space using data-driven (black-box) or grey-box system identification techniques. Note that each dynamic model could be linear or nonlinear based on the fit to the data. The order of the model might, according to some embodiments, be selected automatically using Hankel norm analysis or any other model order selection technique. The parameters of the model may be estimated using any system identification method such as PE, N4SID, ERA, *etc.*

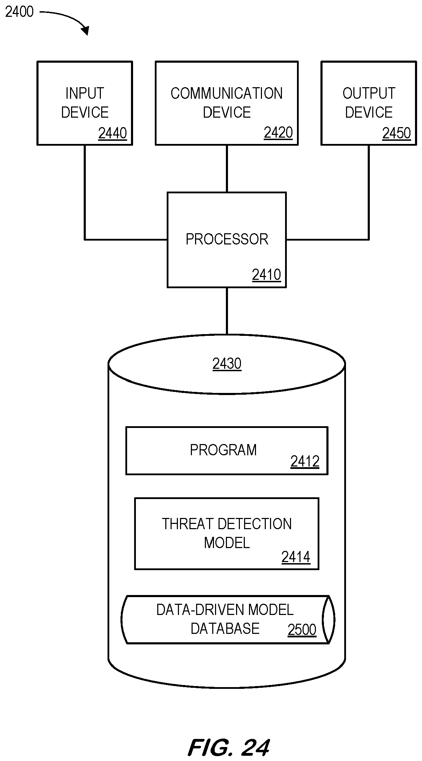

The embodiments described herein may be implemented using any number of different hardware configurations. For example, FIG. 24 is a block diagram of an industrial asset protection platform 2400 that may be, for example, associated with the systems 600, 900 of FIGS. 6 and 9 respectively. The industrial asset protection platform 2400 comprises a processor 2410, such as one or more commercially available Central Processing Units ("CPUs") in the form of one-chip microprocessors, coupled to a communication device 2420 configured to communicate via a communication network (not shown in FIG. 24). The communication device 2460 may be used to communicate, for example, with one or more remote monitoring nodes, user platforms, digital twins, *etc.* The industrial asset protection platform 2400 further includes an input device 2440 (*e.g.,* a computer mouse and/or keyboard to input adaptive and/or predictive modeling information) and/an output device 2450 (*e.g.,* a computer monitor to render a display, provide alerts, transmit recommendations, and/or create reports). According to some embodiments, a mobile device, monitoring physical system, and/or PC may be used to exchange information with the industrial asset protection platform 2400.

The processor 2410 also communicates with a storage device 2430. The storage device 2430 may comprise any appropriate information storage device, including combinations of magnetic storage devices (*e.g.,* a hard disk drive), optical storage devices, mobile telephones, and/or semiconductor memory devices. The storage device 2430 stores a program 2412 and/or a threat detection model 2414 for controlling the processor 2410. The processor 2410 performs instructions of the programs 2412, 2414, and thereby operates in accordance with any of the embodiments described herein. For example, the processor 2410 may receive, from a system node data store, system node data associated with an industrial asset. The processor 2410 may also automatically construct a data-driven, dynamic system model for the industrial asset based on the received system node data (*e.g.,* using a digital twin formed from a plurality of interconnected and simultaneously trained artificial intelligence models). The processor 2410 may then inject at least one synthetic attack into the data-driven, dynamic system model to create, for each of a plurality of monitoring nodes, a series of synthetic attack monitoring node values over time that represent simulated attacked operation of the industrial asset. The processor 2410 may store the series of synthetic attack monitoring node values over time that represent simulated attacked operation of the industrial asset. This information may then be used, for example, by the processor 2410 along with normal operational data to construct a threat detection model for the industrial asset.

The programs 2416, 2414 may be stored in a compressed, uncompiled and/or encrypted format. The programs 2416, 2414 may furthermore include other program elements, such as an operating system, clipboard application, a database management system, and/or device drivers used by the processor 2410 to interface with peripheral devices.

As used herein, information may be "received" by or "transmitted" to, for example: (i) the industrial asset protection platform 2400 from another device; or (ii) a software application or module within the industrial asset protection platform 2400 from another software application, module, or any other source.

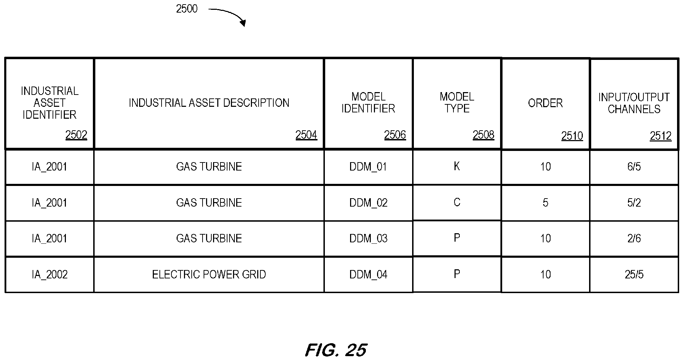

In some embodiments (such as the one shown in FIG. 24), the storage device 2430 further stores a data-driven model database 2500. An example of a database that may be used in connection with the industrial asset protection platform 2400 will now be described in detail with respect to FIG. 25. Note that the database described herein is only one example, and additional and/or different information may be stored therein. Moreover, various databases might be split or combined in accordance with any of the embodiments described herein.

Referring to FIG. 25, a table is shown that represents the data-driven model database 2500 that may be stored at the industrial asset protection platform 2400 according to some embodiments. The table may include, for example, entries identifying industrial assets to be protected. The table may also define fields 2502, 2504, 2506, 2508, 2510, 2512 for each of the entries. The fields 2502, 2504, 2506, 2508, 2510, 2512 may, according to some embodiments, specify: an industrial asset identifier 2502, an industrial asset description 2504, a model identifier 2506, a model type 2508, an order 2510, and input/output channels 2512. The data-driven model database 2500 may be created and updated, for example, when a new physical system is monitored or modeled, existing systems are upgraded, *etc.*

The industrial asset identifier 2502 and description 2504 may define a particular machine or system that will be protected. The model identifier 2506 might be a unique alphanumeric code identifying a particular data-driven, dynamic system model. The model type 2508 might indicate if it is a control system model, plant model, *etc.* The order 2510 might be automatically selected (*e.g.,* via a Hankel norm analysis). The input/output channels 2512 might indicate how many input channels and output channels are supported by the model.

Thus, embodiments may provide technical advantages, such as enabling attack synthesis without having high-fidelity models (which normally require time and involve cost). Embodiments may also enable supervised classification which outperforms semi-supervised classification based on using normal only data. Some embodiments may address un-met needs for legacy systems from various manufacturers of power generation assets (and other types of industrial assets).

The following illustrates various additional embodiments of the invention. These do not constitute a definition of all possible embodiments, and those skilled in the art will understand that the present invention is applicable to many other embodiments. Further, although the following embodiments are briefly described for clarity, those skilled in the art will understand how to make any changes, if necessary, to the above-described apparatus and methods to accommodate these and other embodiments and applications.

Although specific hardware and data configurations have been described herein, note that any number of other configurations may be provided in accordance with embodiments of the present invention (*e.g.,* some of the information associated with the databases described herein may be combined or stored in external systems). For example, although some embodiments are focused on gas turbine generators, any of the embodiments described herein could be applied to other types of assets, such as dams, the power grid, military devices, *etc.*

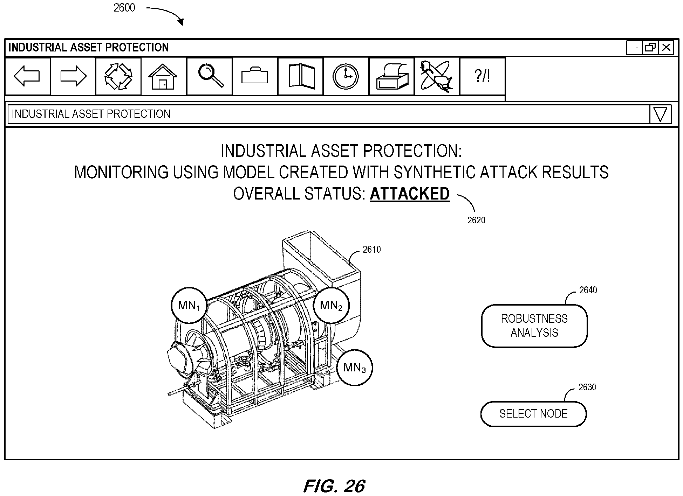

FIG. 26 is a threat detection system display 2600 in accordance with some embodiments. The display 2600 includes information about an industrial asset 2610 having a number of monitoring nodes (MNi through MN$_2$). In particular, the display 2600 might include an overall current system status 2620 as determined by any of the embodiments described herein. According to some embodiments, the display 2600 is interactive and may be used by an operator to determine more detailed information (*e.g.,* via selection of an icon 2630), perform a robustness analysis 2640, and/or to adjust the operation of the system.

The present invention has been described in terms of several embodiments solely for the purpose of illustration. Persons skilled in the art will recognize from this description that the invention is not limited to the embodiments described but may be practiced with modifications and alterations limited only by the spirit and scope of the appended claims.

## Claims

1. A system 100 associated with an industrial asset, comprising:

   a system node data store 120 containing historical system node data associated with normal operation of the industrial asset;
   a plurality of artificial intelligence model construction platforms 155, coupled to the system node data store 120, to receive the historical system node data and to each automatically construct a data-driven, dynamic artificial intelligence model 157 associated with the industrial asset based on received system node data, wherein the plurality of artificial intelligence models 157 are interconnected and simultaneously trained to create a digital twin of the industrial asset; and
   a synthetic disturbance platform 160 to inject at least one synthetic disturbance into the plurality of artificial intelligence models 157 to create, for each of a plurality of monitoring nodes 110, a series of synthetic disturbance monitoring node values over time that represent simulated abnormal operation of the industrial asset.

2. The system 100 of claim 1, wherein the monitoring nodes 110 include at least one of: (i) a sensor node, (ii) a critical sensor node, (iii) an actuator node, (iv) a controller node, and (v) a key software node.

3. The system 100 of claim 1, wherein the digital twin is associated with at least one of: (i) control-oriented modeling, (ii) control design, (iii) state estimation, (iv) a dynamic system simulation, and (v) a fault/anomaly simulation.

4. The system 100 of claim 1, wherein at least one data-driven, dynamic artificial intelligence model 157 is built in state-space and using one of black-box and grey-box system identification techniques.

5. The system 100 of claim 4, wherein at least one of the data-driven, dynamic artificial intelligence models 157 are associated with at least one of: (i) a plant model of the industrial asset, (ii) a controller model of the industrial asset, and (iii) a sub-controller model of the industrial asset.

6. The system 100 of claim 1, wherein at least one of the data-driven, dynamic artificial intelligence models 157 is associated with a linear or nonlinear model.

7. The system 100 of claim 1, wherein at least one of the data-driven, dynamic artificial intelligence models 157 is associated with a model order automatically selected by at least one of the artificial intelligence model construction platforms.

8. The system 100 of claim 7, wherein the selection is performed via a Hankel norm analysis.

9. The system 100 of claim 7, wherein parameters of the at least one data-driven, dynamic artificial intelligence model 157 is estimated via a system identification method associated with at least one of: (i) Prediction Error ("PE") minimization, (ii) subspace methods, (iii) Subspace State Space System Identification ("N4SID"), and (iv) Eigen-system Realization Algorithm ("ERA") techniques.

10. The system 100 of claim 1, wherein at least one of the data-driven, dynamic artificial intelligence models 157 is associated with one of: (i) a Single-Input, Single-Output ("SISO") model, (ii) a Single-Input, Multiple-Output ("SIMO") model, (ii) a Multiple-Input, Single-Output ("MISO") model, and (iv) a Multiple-Input, Multiple-Output ("MIMO") model.

*FIG. 1*

S210

Receive, By Plurality Of Artificial Intelligence Model Construction Platforms From A System Node Data Store, Historical System Node Data Associated With Normal Operation Of An Industrial Asset

S220

Automatically Construct, By Each Model Construction Platform, A Data-Driven, Dynamic Artificial Intelligence Model Associated With The Industrial Asset (And The Artificial Intelligence Models Are Interconnected)

S230

Simultaneously Train The Plurality Of Data-Driven, Dynamic Artificial Intelligence Models To Create A Digital Twin Of The Industrial Asset

S240

Inject At Least One Synthetic Disturbance Into The Artificial Intelligence Models To Create, For Each Of A Plurality Of Monitoring Nodes, A Series Of Synthetic Disturbance Monitoring Node Values Over Time That Represent Simulated Abnormal Operation Of The Industrial Asset

*FIG. 2*

FIG. 3

*FIG. 4*

FIG. 5

Y @ T=1 ——————————

Y @ T=n ——————————

600

Y @ T=0 →

F @ T=0 →

K – C – P @ T=0

K – C – P @ T=1

• • •

K – C – P @ T=n

Y out

F out

*FIG. 6*

*FIG. 7*

*FIG. 8*

*FIG. 9*

FIG. 10

*FIG. 11*

1210

| ACTUAL CLASS | PREDICTED CLASS | | |
|---|---|---|---|
| | # | N | A |
| | N | 509 | 3 |
| | A | 26 | 462 |

1220

| ACTUAL CLASS | PREDICTED CLASS | | |
|---|---|---|---|
| | % | N | A |
| | N | 99.42 | 0.58 |
| | A | 5.32 | 94.68 |

## FIG. 12

FIG. 13

S1410

Receive A Series Of Current Monitoring Node Values And Generate A
Set Of Current Feature Vectors

S1420

Access At Least One Threat Detection Model Having At Least One Decision
Boundary

S1430

Execute The Threat Detection Model And Transmit A Threat Alert Based
On The Set Of Current Feature Vectors And The At Least One Decision
Boundary, Wherein The Threat Alert Indicates Whether A Monitoring
Node Status Is Normal Or Abnormal

*FIG. 14*

1500

COMPRESSOR DISCHARGE PRESSURE

W2

1512

1514

1516

1510

W1

*FIG. 15*

**FIG. 16**

S1710

Receive The Series Of Normal Monitoring Node Values And Generate A Set Of Normal Feature Vectors

S1720

Automatically Calculate And Output The At Least One Decision Boundary For The Threat Detection Model Based On The Set Of Normal Feature Vectors

*FIG. 17*

1800

SYSTEM NODE DATA
1810

SYSTEM MODEL CONSTRUCTION PLATFORM
1850

DATA-DRIVEN, DYNAMIC SYSTEM MODEL

SYNTHETIC ATTACK PLATFORM
1860

SYNTHETIC ATTACK SPACE DATA SOURCE
1830

*FIG. 18*

S1910

Receive System Node Data Associated With Industrial Asset

S1920

Automatically Construct, By System Model Construction Platform, A Data-Driven, Dynamic System Model For The Industrial Asset Based On The Received System Node Data

## FIG. 19

S2010

Inject Synthetic Attack Into Data-Driven, Dynamic System Model To Create, For Each Of A Plurality Of Monitoring Nodes, A Series Of Synthetic Attack Monitoring Node Values Over Time That Represent Simulated Attacked Operation Of The Industrial Asset

S2020

Store, For Each Of The Plurality Of Monitoring Nodes, The Series Of Synthetic Attack Monitoring Node Values Over Time That Represent Simulated Attacked Operation Of The Industrial Asset

*FIG. 20*

THREAT DETECTION MODEL CREATION COMPUTER 2160

THREAT DETECTION COMPUTER
2155 THREAT DETECTION MODEL 2150

NORMAL SPACE DATA SOURCE 2120

SYNTHETIC ATTACK SPACE DATA SOURCE 2130

THREAT ALERT

*FIG. 21*

S2210

Receive The Series Of Normal Monitoring Node Values And Generate A Set Of Normal Feature Vectors

S2220

Receive The Series Of Synthetic Attack Monitoring Node Values And Generate A Set Of Synthetic Attack Feature Vectors

S2230

Automatically Calculate And Output The At Least One Decision Boundary For The Threat Detection Model Based On The Set Of Normal Feature Vectors And The Set Of Synthetic Attack Feature Vectors

*FIG. 22*

GENERATOR A GENERATOR B GENERATOR C

2310

$t_1$ $t_2$ $t_3$ $t_4$ ...
$S_1$
$S_2$
$S_3$
$S_4$
...

$t_1$ $t_2$ $t_3$ $t_4$ ...
$S_1$
$S_2$
$S_3$
$S_4$
...

$t_1$ $t_2$ $t_3$ $t_4$ ...
$S_1$
$S_2$
$S_3$
$S_4$
...

2320

FEATURE ENGINEERING | FEATURE ENGINEERING | FEATURE ENGINEERING

2330

| $FS_{A1}$ | |
| $FS_{A2}$ | |
| $FS_{A3}$ | |

| $FS_{B1}$ | |
| $FS_{B2}$ | |
| $FS_{B3}$ | |

| $FS_{C1}$ | |
| $FS_{C2}$ | |
| $FS_{C3}$ | |

2340

| $FS_{A1}$ | $FS_{A2}$ | $FS_{A3}$ | $FS_{B1}$ | $FS_{B2}$ | $FS_{B3}$ | $FS_{C1}$ | $FS_{C2}$ | $FS_{C3}$ |
|---|---|---|---|---|---|---|---|---|
| | | | | | | | | |

2350

2300

INTERACTION FEATURES

2360

ANOMALY DETECTION ENGINE  2370

THREAT ALERT

*FIG. 23*

2400

| INPUT DEVICE 2440 | COMMUNICATION DEVICE 2420 | OUTPUT DEVICE 2450 |

PROCESSOR 2410

2430

| PROGRAM 2412 |

| THREAT DETECTION MODEL 2414 |

| DATA-DRIVEN MODEL DATABASE 2500 |

*FIG. 24*

2500

| INDUSTRIAL ASSET IDENTIFIER 2502 | INDUSTRIAL ASSET DESCRIPTION 2504 | MODEL IDENTIFIER 2506 | MODEL TYPE 2508 | ORDER 2510 | INPUT/OUTPUT CHANNELS 2512 |
|---|---|---|---|---|---|
| IA_2001 | GAS TURBINE | DDM_01 | K | 10 | 6/5 |
| IA_2001 | GAS TURBINE | DDM_02 | C | 5 | 5/2 |
| IA_2001 | GAS TURBINE | DDM_03 | P | 10 | 2/6 |
| IA_2002 | ELECTRIC POWER GRID | DDM_04 | P | 10 | 25/5 |

*FIG. 25*

2600

INDUSTRIAL ASSET PROTECTION

INDUSTRIAL ASSET PROTECTION

INDUSTRIAL ASSET PROTECTION:
MONITORING USING MODEL CREATED WITH SYNTHETIC ATTACK RESULTS
OVERALL STATUS: **ATTACKED**

2620

2610

MN₁  MN₂  MN₃

2640

ROBUSTNESS
ANALYSIS

2630

SELECT NODE

*FIG. 26*

Europäisches
Patentamt

European
Patent Office

Office européen
des brevets

# EUROPEAN SEARCH REPORT

Application Number

EP 24 15 5942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/272139 A1 (RAKUFF STEFAN [US] ET AL) 27 August 2020 (2020-08-27) | 1-3,5,6 | INV. G05B23/02 |
| Y | * paragraphs [0001] - [0016], [0033] - [0036], [0062] - [0077]; figures 2-3C * | 4,7-10 | |
| Y | US 11 513 479 B1 (HERNANDEZ DANIEL JOSEPH [US] ET AL) 29 November 2022 (2022-11-29) * column 1, line 2 - column 2, line 2 * * column 2, line 60 - column 3, line 4 * * column 5, line 34 - column 7, line 65 * | 4,7-10 | |
| A | CN 114 118 777 A (UNIV SHANGHAI TRAFFIC) 1 March 2022 (2022-03-01) * the whole document * | 1-10 | |

**TECHNICAL FIELDS SEARCHED (IPC)**

G05B

The present search report has been drawn up for all claims

| Place of search | Date of completion of the search | Examiner |
|---|---|---|
| Munich | 4 July 2024 | Postemer, Patricia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 5942

04-07-2024

| Patent document cited in search report | | Publication date | Patent family member(s) | | Publication date |
|---|---|---|---|---|---|
| US 2020272139 | A1 | 27-08-2020 | AU | 2020201202 A1 | 10-09-2020 |
| | | | CN | 111595577 A | 28-08-2020 |
| | | | GB | 2583402 A | 28-10-2020 |
| | | | US | 2020272139 A1 | 27-08-2020 |
| US 11513479 | B1 | 29-11-2022 | NONE | | |
| CN 114118777 | A | 01-03-2022 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230093713 A
- US 10671060 B

- US 20200389478